# EUROPÄISCHE PATENTANMELDUNG

(11) **EP 0 689 984 A1**
(43) Veröffentlichungstag der Anmeldung: **03.01.1996**
(21) Anmeldenummer: 94111385.4
(22) Anmeldetag: 21.07.1994
(51) Int. Cl.: B62B 3/10

(54) **Plattentransportwagen**

(30) Priorität: 29.06.1994 DE 9410510 U
(71) Anmelder: Jenkner, Erwin, D-71083 Herrenberg-Oberjesingen (DE)
(72) Erfinder: Jenkner, Erwin, D-71083 Herrenberg-Oberjesingen (DE)
(74) Vertreter: Becker, Maria, Dipl.-Phys.

(57) **Zusammenfassung**

Bei einem Plattentransportwagen, mit einem Fahrgestell (10), einer auf diesem aufrecht angeordneten Plattenstütze (12) zum Abstützen wenigstens einer hochkant abgestellten Platte (38) und mit einer durch eine Antriebsvorrichtung (50) relativ zur Plattenstütze (12) verstellbaren, die Platte (38) mit Plattenauflagern (46) untergreifenden Plattenhubvorrichtung (36) ist zur mühelosen Einlagerung bzw. Entnahme von Platten vorgesehen, daß der Plattenhubvorrichtung (36) eine gestellfeste, eine horizontale Plattenaufnahmebasis bildende, sich parallel zur Plattenstütze (12) erstreckende und in der Plattenaufstellebene von Schräg- oder Senkrechtlagern zur Plattenmagazinierung liegende Rollenbahn (22) zugeordnet ist und daß sich die Plattenauflager (46) der Plattenhubvorrichtung (36) in ihrer unteren Ausgangsstellung unterhalb der durch die Rollenbahn (22) definierten Plattenaufnahmebasis befinden.

## Beschreibung

Die Erfindung betrifft einen Plattentransportwagen in einer Ausbildung gemäß dem Oberbegriff von Anspruch 1.

Ein Plattentransportwagen dieser Art für den Transport von hochkantgestellten Hartfaser- oder Preßspanplatten ist bereits bekannt (s. Prospekt HOLZ-HER der Firma Reich Spezialmaschinen GmbH, Nürtingen).

Bei dieser Konstruktion bildet die aufrechte Plattenstütze zusammen mit dem Fahrgestell einen Rahmen, zwischen dessen seitlichen Rahmenschenkeln eine gleichfalls rahmenartig ausgebildete Platttenhubvorrichtung höhenverstellbar geführt ist. Diese ist am unteren Rahmenschenkel mit zwei nach vorne von diesem abragenden und im Abstand voneinander angeordneten Plattenauflagern ausgestattet, auf die zu transportierende Platten mit ihrer Unterkante aufsetzbar sind.

Diese Art der Plattenaufnahme erfordert für das Einlagern von aufrechtstehenden Platten in Schräg- oder Senkrechtlager von der solche Arbeiten verrichtenden Person, insbesondere wenn es sich um entsprechend schwere Plattenformate handelt, große Kraftanstrengungen. Einerseits ist für das Einlagern einer Platte diese anfänglich an deren vom Schräg- oder Senkrechtlager abgekehrten Plattenende aus von den Plattenauflagern herunterzuschieben, was im Falle sehr schwerer Platten auch ein Anheben der Platten am Hinterende notwendig macht; andererseits ist zur Entnahme von Platten aus entsprechenden Plattenlagern an diesen an deren zugänglichem Plattenende unterkantenseitig ein spezieller Entnahmehaken anzusetzen, mit dessen Hilfe sich die betreffende Platte auf den Transportwagen ziehen läßt. Dabei ist die Platte auch anzuheben, um das voreilende Plattenende mit seiner Unterkante über die Plattenauflage zu heben.

Schließlich ist der Plattentransportwagen beim Einsatz an vertikalen Plattenaufteilsägen zur Plattenübergabe vor diesen exakt zu positionieren.

Der Erfindung liegt die Aufgabe zugrunde, einen Plattentransportwagen der im Oberbegriff des Anspruches 1 erläuterten Art anzugeben, der ein leichtes und entsprechend schnell durchführbares Einlagern von Platten in entsprechende Plattenlager bzw. deren Entnahme aus solchen ermöglicht.

Diese Aufgabe wird erfindungsgemäß durch die kennzeichnenden Merkmale des Anspruches 1 gelöst.

Die durch eine Rollenbahn gebildete, gestellfeste Plattenabstützbasis ermöglicht es, Platten von dieser ohne großen Kraftaufwand herunter- und in ein Plattenlager einzuschieben. Ebenso vorteilhaft und ohne irgendein Hilfswerkzeug zu benötigen, lassen sich aus Plattenlagern zu entnehmende Platten auf den Plattentransportwagen aufschieben.

Zum Bestücken des Plattentransportwagens sind die Plattenauflager seiner Plattenhubvorrichtung in eine obere Plattenübernahmestellung zu bringen, da üblicherweise auf Lastkraftwagen liegend angelieferte Platten beim Abladen abzukippen sind. Dabei sind sie mit ihrer dann nach unten zu liegen kommenden Längskante auf die nach oben gesteuerten Plattenauflager der Plattenhubvorrichtung abzusetzen, um insbesondere im Fall schwerer Platten deren Kippwinkel nicht zu steil wählen zu müssen. Danach ist die Plattenhubvorrichtung abzusenken. In der Endphase ihrer Absenkbewegung tauchen dann die Plattenauflager der Plattenhubvorrichtung zwischen den Rollen der Rollenbahn ab, wodurch die Platte mit deren unten liegenden Plattenkante zwangsläufig von dieser zum anschließenden Einschieben in ein Plattenlager aufgenommen wird.

Sollte hierbei die Plattenauflageebene von Plattenlagern in einer Ebene liegen, die sich oberhalb der Ebene der durch die Rollenbahn definierten Plattenabstützbasis befindet, so läßt sich dieser Höhenunterschied durch entsprechende Einstellung der Plattenhubvorrichtung bzw. deren Plattenauflager in Hochrichtung kompensieren.

Für diesen Fall kann es vorteilhaft sein, auch die Plattenauflager mit entsprechenden Rollen auszustatten.

Ebenso kann auf diese Weise die Übergabe einer Platte auf vertikale Plattenaufteilsägen erfolgen, wobei sich die Plattenpositionierung sehr einfach und leicht gestaltet, indem sich hierzu die Platte auf der Rollenbahn relativ zum Transportwagen entsprechend verschieben läßt.

Eine bevorzugte Ausführungsform der Erfindung ist Gegenstand des Anspruches 2. In diesem Falle bildet der die Rollen lagernde Teil der Rollenbahn zugleich einen stabilen Längsträger des Fahrgestells.

Durch die Ausbildung der Plattenhubvorrichtung gemäß Anspruch 3 konnte deren Bauhöhe gering gehalten und eine aufwendige Führung der Hubvorrichtung an der Plattenstütze umgangen werden.

Die Ausbildung und Anordnung der Antriebsvorrichtung für die Plattenhubvorrichtung gemäß Anspruch 4 ermöglicht deren ergonomisch günstige Betätigung, sowie eine optimal zu führende Antriebsverbindung mit der Plattenhubvorrichtung.

Eine günstige Gestaltung der Plattenstütze ist Gegenstand des Anspruches 5, wobei sich die Antriebsvorrichtung vorteilhaft zwischen den beiden Schenkeln des einen U-förmigen Stützenteils unterbringen läßt.

In der Zeichnung ist ein Ausführungsbeispiel der Erfindung dargestellt. Es zeigt:
- Figur 1: eine schaubildliche Darstellung des Plattentransportwagens, von vorne gesehen, wobei sich dessen Plattenhubvorrichtung in ihrer unteren Ausgangsstellung befindet,

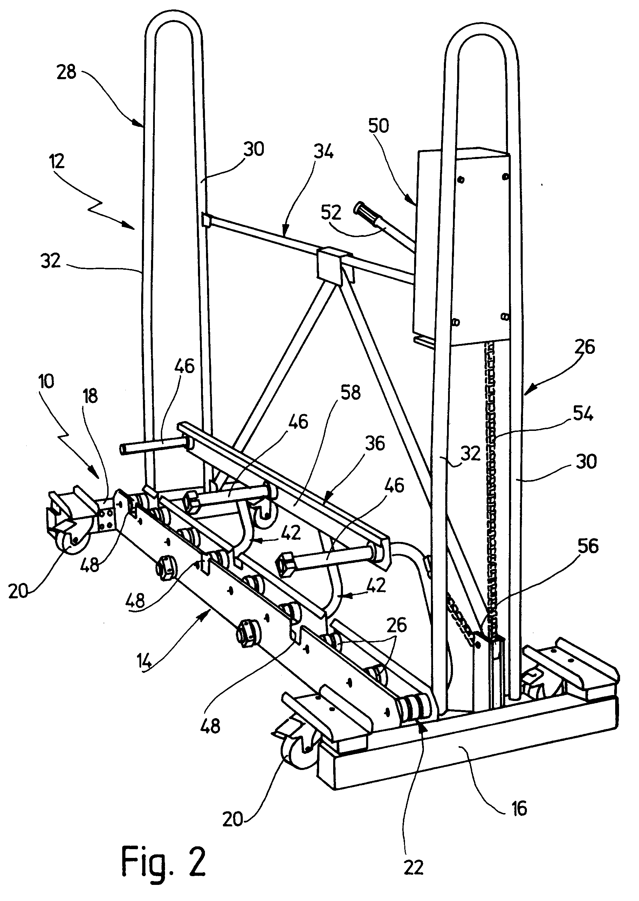

- Figur 2: eine Darstellung ähnlich Figur 1, wobei sich die Plattenhubvorrichtung in ihrer maximalen Hubstellung befindet,
- Figur 3: eine Rückansicht des Plattentransportwagens mit einer Einstellung der Plattenhubvorrichtung gemäß Figur 2 und mit aufgenommener Platte,
- Figur 4: einen Teillängsschnitt der Rollenbahn, wobei sich die Plattenauflager der Plattenhubvorrichtung in ihrer unteren Ausgangsstellung befinden.

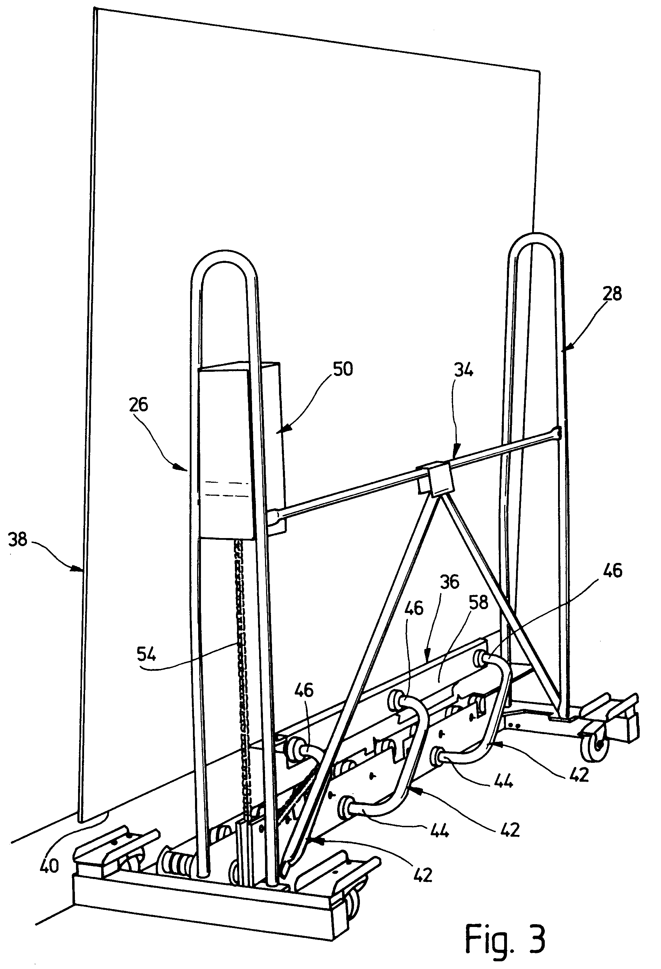

In der Zeichnung bezeichnet 10 als Ganzes ein Fahrgestell des Plattentransportwagens. Dieser trägt eine aufrecht angeordnete Plattenstütze 12 für auf dem Plattentransportwagen hochkant abzustellende und zu transportierende Platten, beispielsweise großformatige Hartfaser- oder Preßspanplatten (s. Figur 3).

Das Fahrgestell 10 ist etwa I-förmig ausgebildet, wobei die endseitig am Verbindungssteg 14 des I vorgesehenen T-Balken 16 und 18 an diesem vorzugsweise außermittig angesetzt sind. An den Enden der T-Balken 16, 18 ist jeweils eine Wagenlaufrolle 20 angelenkt.

Der Plattenstütze 12 ist fahrgestellseitig eine horizontale, sich parallel zu dieser erstreckende und eine Plattenaufnahmebasis bildende Rollenbahn 22 zugeordnet. Ihre Länge entspricht im wesentlichen derjenigen des Fahrgestells 10.

Die Rollen 24 der Rollenbahn 22 sind in einer oben offenen, beispielsweise im Querschnitt U-förmigen Profilschiene gelagert, die vorzugsweise zugleich den Verbindungssteg 14 des Fahrgestells 10 bildet. Die durch die Rollenbahn 22 definierte horizontale Plattenaufnahmebasis ist in der Höhe derart angeordnet, daß sie sich in der Plattenaufstellebene von Schräg- oder Senkrechtlagern zur Plattenmagazinierung befindet. Eine auf der Rollenbahn 22 hochkantig abgestellte Platte läßt sich deshalb mühelos in ein solches Plattenlager einschieben oder aus einem solchen übernehmen.

Die Plattenstütze 12 ist der einen Längsseite der Rollenbahn 22 bzw. des Verbindungssteges 14 benachbart vorgesehen. Sie weist zwei umgekehrt U-förmige, aufrecht angeordnete Stützenteile 26 und 28 auf, die mit dem freien Ende ihrer U-Schenkel 30, 32 auf jeweils einem der T-Balken 16 bzw. 18 befestigt sind. Deren dem Verbindungssteg 14 benachbarter U-Schenkel 32 ist zumindest auf einem oberen Teilstück nach hinten geneigt bzw. in einem stumpfen Winkel zur Ebene der Plattenaufnahmebasis 22 vorgesehen, um während des Plattentransportes eine stabile Plattenanlage sicherzustellen. Beide Stützenteile 26, 28 sind über eine hintere Verstrebung 34 ecksteif miteinander verbunden und auf dem Teilstück der T-Balken 16, 18 des Fahrgestelles 10 angeordnet, das, bezogen auf den Verbindungssteg 14, die größere Länge aufweist.

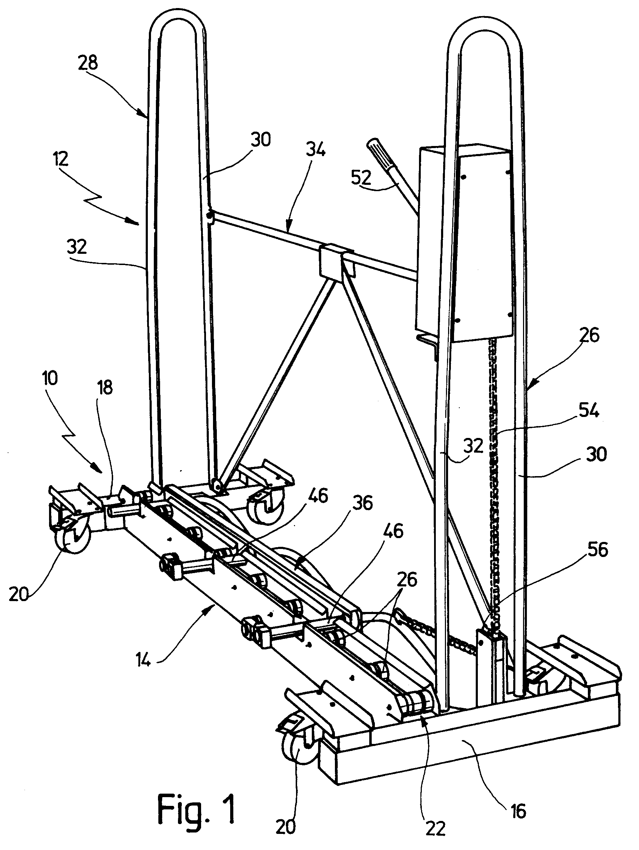

Mit 36 ist als Ganzes eine Plattenhubvorrichtung bezeichnet, die dazu dient, auf den Plattentransportwagen aufzustellende Platten 38 mit deren unten liegender Plattenkante 40 (s. Figur 3) zunächst abzustützen, wenn diese z. B. liegend von Lastkraftwagen entladen und Plattenlagern zugeführt werden soll. Hierzu ist die Plattenhubvorrichtung 36 zunächst in ihre obere Übernahmestellung zu steuern (s. Figur 1). Nunmehr kann eine Platte 38 über die Pritschenkante des Lastkraftwagens leicht abgekippt und mit der dann zu unten liegen kommenden Plattenkante 40 auf die Plattenhubvorrichtung 36 aufgelegt werden. Anschließend ist diese in ihre untere Übergabestellung abzusenken, wobei die Platte 38 auf dem Plattentransportwagen aufgestellt und an die Plattenstütze 12 angelegt werden kann.

Im Verlaufe der Absenkbewegung der Plattenhubvorrichtung 36 wird dabei die Platte 38 mit ihrer Plattenkante 40 auf den Rollen 26 der Rollenbahn 22 abgesetzt, worauf der Plattentransport zu einem Plattenlager oder auch zu einer Plattenaufteilsäge erfolgen kann. Handelt es sich hierbei z. B. um eine vertikale Plattenaufteilsäge, so läßt sich mit Hilfe der Plattenhubvorrichtung 36 die Platte 38 auf die Höhe anheben, die für die Übergabe auf den vertikalen Aufspanntisch solcher Plattenaufteilsägen notwendig ist.

Analog hierzu läßt sich die Plattenhubvorrichtung 36 auch benutzen, wenn sich die Plattenaufstellebene von Plattenlagern oberhalb der durch die Rollenbahn 22 definierten Plattenaufnahmebasis des Plattentransportwagens befinden sollte.

Beim vorliegenden Ausführungsbeispiel ist die Plattenhubvorrichtung 36 am Fahrgestell 10 bzw. an der dessen Verbindungssteg 14 bildenden Profilschiene angeordnet. Sie ist beispielsweise mit drei gleichartig ausgebildeten Plattenaufnahmegliedern 42 ausgestattet, die z. B. U-förmig gestaltet sind.

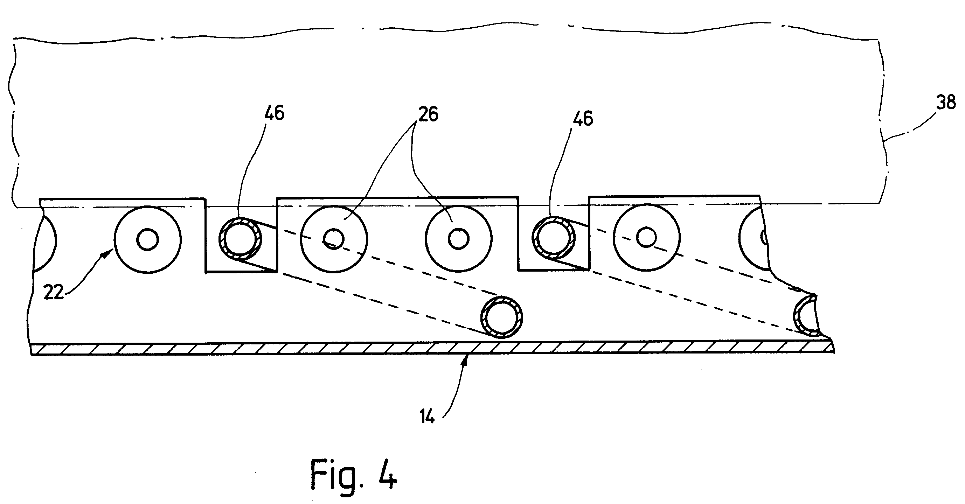

Mit ihrem einen horizontal angeordneten U-Schenkel 44 sind sie im Verbindungssteg 14 verstellbar gelagert, während der andere horizontale U-Schenkel ein Plattenauflager 46 zur Plattenaufnahme bildet. Die gestellseitige Lagerung der Plattenaufnahmeglieder 42 ist so getroffen, daß ihr oberer U-Schenkel bzw. Plattenauflager 46 in der untersten Schwenkendlage der Plattenaufnahmeglieder 42 in Schenkelausschnitte 48 der Profilschiene 14 derart eingreift, daß er sich zur Plattenabstützung auf der Rollenbahn 22 unterhalb der durch sie definierten Plattenaufnahmebasis befindet (s. Figur 4).

Zur Betätigung der Plattenhubvorrichtung 36 dient eine vorzugsweise von einer Energiequelle unabhängige Antriebsvorrichtung 50, die beispielsweise über einen nicht näher gezeigten Seil- oder Kettenantrieb verfügt, der mittels eines Handhebels 52 betätigbar ist. Diese Antriebsvorrichtung 50 ist im oberen Bereich des stützenteils 26 zwischen dessen U-Schenkeln 30, 32 installiert, was eine günstig zu bewerkstelligende Hebelbetätigung ermöglicht.

Im vorliegenden Falle ist ein Kettenantrieb vorgesehen, dessen Rollenkette 54 lediglich am einen der drei Plattenaufnahmeglieder 42 angreift. Zu diesem Zweck ist die Rollenkette 54 von der Antriebsvorrichtung 50 vertikal nach unten und um ein am T-Balken 16 des Fahrgestells 10 gelagertes Kettenrad 56 herum geführt sowie an dem dem Kettenrad 56 benachbarten Plattenaufnahmeglied 42 angelenkt.

Eine Synchronbewegung aller Plattenaufnahmeglieder 42 wird durch eine horizontal angeordnete Mitnehmerleiste 58 sichergestellt, die von den die Plattenauflager 46 bildenden, oberen U-Schenkeln 44 der Plattenaufnahmeglieder 42 drehbeweglich durchsetzt ist. Demgemäß verlagert sich diese Mitnehmerleiste 58 während Hubbewegungen der Plattenhubvorrichtung 36 parallel zur Rollenbahn 22.

Um im Falle vorhandener Höhendifferenzen zwischen der durch die Rollenbahn 22 definierten wagenseitigen Plattenaufnahmeebene und einer Plattenübernahmeebene gleichfalls einen leicht durchführbaren Plattentransport zu ermöglichen, kann vorzugsweise auf dem oberen U-Schenkel bzw. Plattenauflager 46 der Plattenaufnahmeglieder 42 jeweils auch eine verdrehbare Hülse gelagert sein.

## Patentansprüche

1. Plattentransportwagen, mit einem Fahrgestell (10), einer auf diesem aufrecht angeordneten Plattenstütze (12) zum Abstützen wenigstens einer hochkant abgestellten Platte 38 und mit einer durch eine Antriebsvorrichtung (50) relativ zur Plattenstütze (12) verstellbaren, die Platte (38) mit Plattenauflagern (46) untergreifenden Plattenhubvorrichtung (36),
**dadurch gekennzeichnet, daß**
der Plattenhubvorrichtung (36) eine gestellfeste, eine horizontale Plattenaufnahmebasis bildende, sich parallel zur Plattenstütze (12) erstreckende und in der Plattenaufstellebene von Schräg- oder Senkrechtlagern zur Plattenmagazinierung liegende Rollenbahn (22) zugeordnet ist und daß sich die Plattenauflager (46) der Plattenhubvorrichtung (36) in ihrer unteren Ausgangsstellung unterhalb der durch die Rollenbahn (22) definierten Plattenaufnahmebasis befinden.

2. Plattentransportwagen nach Anspruch 1, dadurch gekennzeichnet, daß die Rollen (24) der Rollenbahn (22) zwischen zwei Schenkeln einer obenen offenen Profilschiene (Verbindungssteg 14) gelagert sind und daß das Fahrgestell (10) in Draufsicht etwa I-förmig ist, wobei dessen T-Balken (16, 18) endseitig mit Wagenlaufrollen (20) ausgestattet sind und dessen die T-Balken (16, 18) haltender Verbindungssteg (14) durch die Profilschiene gebildet ist.

3. Plattentransportwagen nach Anspruch 2, dadurch gekennzeichnet, daß die Plattenauflager (46) der Plattenhubvorrichtung (36) durch einen Schenkel von zumindest winkelförmig ausgebildeten Plattenaufnahmegliedern (42) gebildet sind, die an der Profilschiene (Verbindungssteg 14) angelenkt sind, daß die horizontalen Plattenauflager (46) aller Plattenaufnahmeglieder (42) in einer Mitnehmerleiste (58) drehbeweglich gelagert sind und daß die Antriebsvorrichtung (50) an dem an der Profilschiene (Verbindungsleiste 14) angelenkten Teilstück eines der Plattenaufnahmeglieder (42) angreift.

4. Plattentransportwagen nach Anspruch 3, dadurch gekennzeichnet, daß die Antriebsvorrichtung (50) einen im oberen Bereich der Plattenstütze (12) angeordneten, manuell betätigbaren Kettenantrieb aufweist, dessen Kette (54) am Fahrgestell (10) um ein Kettenrad (56) herumgeführt und mit ihrem freien Ende an einem der Plattenaufnahmeglieder (42) befestigt ist.

5. Plattentransportwagen nach einem der vorhergehenden Ansprüche, dadurch gekennzeichnet, daß die Plattenstütze (12) in den Endbereichen des Fahrgestells (10) jeweils ein aufrecht angeordnetes, umgekehrt U-förmiges Stützenteil (26 bzw. 28) aufweist, deren U-Schenkel (30, 32) in einer sich senkrecht zur Längsrichtung des Fahrgestelles (10) erstreckenden Vertikalebene liegen und einer Längsseite der Profilschiene (14) benachbart sind, wobei der der letzteren zugekehrte U-Schenkel (32) beider Stützenteile (26, 28) zumindest entlang eines oberen Teilstückes unter einem stumpfen Winkel zur Plattenaufnahmebasis verläuft.
